# EUROPEAN PATENT APPLICATION

(11) **EP 0 829 391 A1**
(43) Date of publication of application: **18.03.1998**
(21) Application number: 97500144.7
(22) Date of filing: 25.08.1997
(51) Int. Cl.: B60N 3/04

(54) **Carpet for vehicle floors**

(30) Priority: 26.08.1996 ES 9602253 U
(71) Applicant: Vilardell Marin, Jaime, 17480 Roses (Girona) (ES); Faro Sais, Ramon, 17491 Peralada (Girona) (ES)
(72) Inventor: Vilardell Marin, Jaime, 17480 Roses (Girona) (ES); Faro Sais, Ramon, 17491 Peralada (Girona) (ES)
(74) Representative: Ponti Sales, Adelaida

(57) **Abstract**

It has an outline and relief suited to the characteristics of the vehicle floor in which it is to be fitted, and is characterized in that it comprises a single moulded piece (1) of fluid-tight thermoplastic material, the underside thereof which rests on the ground being provided with a plurality of small projections (3) conferring anti-slip properties to said underside.

## Description

The present application refers to a carpet that is specially designed for the floors of motor vehicles, though it could be used for other purposes.

### BACKGROUND OF THE INVENTION

Known in the art are carpets for vehicle floors made of fibrous materials bonded or combined with other materials, which may be fluid-tight.

Such carpets have the drawback of retaining dust and dirt between their fibres, making it difficult to clean them, and they become a germ-generating element. Such carpets also collect moist from the soles of the users' shoes when they have stepped on wet surfaces, or from umbrellas and wet clothes left inside the vehicle.

Another disadvantage of such carpets is that in use they move away from their correct position and may become folded and annoy the users of the vehicle.

It may also be pointed out that manufacturers of supplementary carpets intended to be placed over the vehicle's standard-equipment carpet must make many different models, one for each type of vehicle, which entails having one mould for each model and thus makes the carpets significantly expensive.

### DESCRIPTION OF THE INVENTION

In order to overcome these drawbacks, a carpet for vehicle floors has been designed which is simple to manufacture and which is nonetheless practical and efficient.

The outline and relief of the carpet for vehicle floors is suited to the characteristics of the vehicle floor on which it is to be placed. On the basis of this known embodiment, the carpet is characterized in that it comprises a single moulded piece of fluid-tight thermoplastic material, the underside thereof which rests on the ground being provided with a plurality of small projections conferring anti-slip properties to said underside.

Advantageously, the working ends of said small projections are pointed.

Near the edges of the carpet there are narrow bands of smaller thickness which form lines for optionally trimming back the outline.

More specifically, the carpet is made of a single moulded piece of polypropylene, advantageously in a translucent or transparent material, optionally coloured.

On account of this transparent or translucent characteristic of the carpet, it can blend in with the vehicle's upholstery without being obtrusive.

Preferably, the top side of the carpet comprises a plurality of small undulations.

On account of this feature, the carpet's engraved pattern consisting only of a plurality of small undulations, there are no recesses of any kind in which dust or dirt from the soles of the shoes of the persons using it may be retained.

### BRIEF DESCRIPTION OF THE DRAWINGS

To aid understanding of all that is described in this specification, some drawings are attached which, purely by way of example, show a practical case of an embodiment of this carpet.

### DESCRIPTION OF A PREFERRED EMBODIMENT

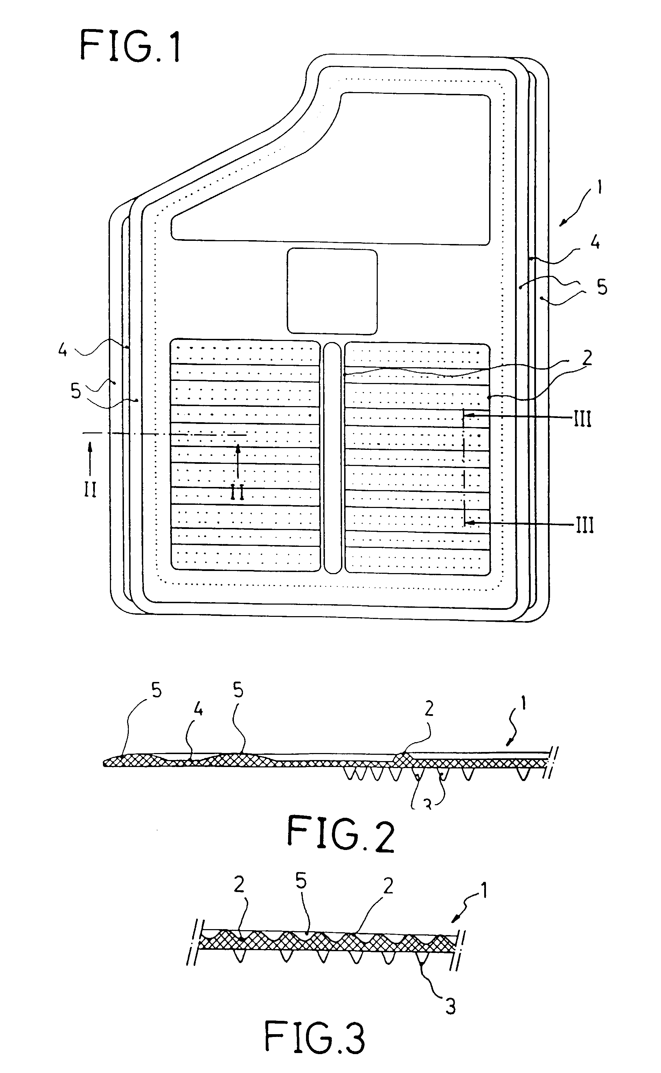

In said drawings, figure 1 is a plan view of the carpet; figure 2 is a detail in cross-section on a larger scale along plane II-II of figure 1; and figure 3 is another detail in cross-section on a larger scale along plane III-III of figure 1.

The carpet comprises a body 1 moulded as a single piece, in polypropylene, transparent or translucent, coloured or uncoloured, whose top surface is provided with reliefs 2 of optional shape whose purpose is to form an anti-slip surface and, at the same time, an identifying design to indicate the vehicle model for which the carpet is intended.

The underside of the body 1 is provided with a plurality of pointed projections 3 which confer the carpet anti-slip properties with regard to the floor of the vehicle.

Near the edge there are bands 4 of smaller thickness, enclosed between protrusions 5 and constituting zones along which the carpet may be cut to reduce its perimeter as desired when required.

As can be deduced from the above description and by examining the drawing, the manufacturing process of the carpet is simple, since it is produced by moulding a single piece of polypropylene. Due to the fact that it is not made of a fibrous material, dirt does not penetrate into the carpet and instead it remains deposited on the surface, it thus being easy to remove. Furthermore, its fluid-tight nature ensures that moisture cannot pass through to the floor of the vehicle, it also being possible to remove it with an absorbent cloth.

Another advantage of this carpet is that it does not slip on the floor of the vehicle thanks to the pointed projections 3 of its underside, which confer anti-slip properties to that surface.

Lastly it is pointed out that the carpet possesses an attractive appearance and design, since it is made from a material with the properties of polypropylene, enabling a transparent and/or coloured carpet to be produced in order to achieve wholly new aesthetic effects.

The materials used in the manufacturing of the carpet, its shape and size and any accessory details that might arise are independent from the subject matter of this invention, provided that they do not affect its essential nature.

## Claims

1. Carpet for vehicle floors, having an outline and relief suited to the characteristics of the vehicle floor in which it is to be fitted, characterized in that it comprises a single moulded piece (1) of fluid-tight thermoplastic material, the underside thereof which rests on the ground being provided with a plurality of small projections (3) conferring anti-slip properties to said underside.

2. Carpet for vehicle floors as claimed in claim 1, characterized in that the working ends of said small projections (3) are pointed.

3. Carpet for vehicle floors as claimed in claim 1, characterized in that near the edges of the carpet there are narrow bands (4) of smaller thickness which form lines for optionally trimming back the outline.

4. Carpet for vehicle floors as claimed in claim 1, characterized in that the carpet is made of a single moulded piece (1) of polypropylene.

5. Carpet for vehicle floors as claimed in claim 1, characterized in that it is made in a translucent material.

6. Carpet for vehicle floors as claimed in claim 1, characterized in that it is made in a transparent material.

7. Carpet for vehicle floors as claimed in claim 1, characterized in that its top side has a plurality of small undulations (2).
